# EUROPEAN PATENT SPECIFICATION

(11) **EP 2 949 605 B1**
(45) Date of publication and mention of the grant of the patent: **05.07.2017**
(21) Application number: 14170241.5
(22) Date of filing: 28.05.2014
(51) Int. Cl.: B65G 1/137, B65G 1/04

(54) **Method of order fulfilling by making storage units available from a storage facility at a picking station**
Verfahren zur Befehlserfüllung durch Verfügbarmachung von Lagereinheiten aus einer Lagereinrichtung in einer Kommissionierungsstation
Procédé de renouvellement de commande en rendant disponible des unités de stockage à partir d'une installation de stockage dans une station de prélèvement

(43) Date of publication of application: 02.12.2015
(73) Proprietor: Dematic GmbH, 63150 Heusenstamm (DE)
(72) Inventor: Meurer, Hans Christoph, 64380 Roßdorf (DE)
(74) Representative: Moser Götze & Partner Patentanwälte mbB

(56) References cited:
- EP-A2- 1 452 462
- EP-B1- 1 964 792
- WO-A1-2012/069327
- DE-A1-102007 016 453
- DE-A1-102012 107 176
- US-A1- 2009 136 328

## Description

The invention relates to a method of order fulfilling. When picking or compiling orders from transporting units, such as e.g. articles or containers, it is necessary to provide the product or storage units carrying the articles, which are associated with a common order, in a directed or sorted fashion. In addition, it is conventional to intermediately store (buffer) the transporting units of an order, until all of the transporting units required for the order are present. They are then passed together onto a collecting line which leads them e.g. to the palletization area, picking station, goods issue, shipment etc.

In the picking station the goods or articles for fulfilling an order are taken from the product (transporting or storage) units and placed according to the order into an order container etc. The storage container (often called donor unit) is then routed back into the racking storage and stored until needed for the next order.

A (high bay) racking storage facility includes a storage-entry area, via which the goods are supplied to and from which the Automatic Storage and Retrieval Machine (hereafter called AS/RS) collects the goods for placement in storage, the so-called front-zone. In a similar manner, a retrieval area is required, at which after retrieval from storage the AS/RS deposit the goods which are likewise assigned to the front-zone. In the case of automatic picking storage facilities, picking locations are typically situated in the front-zone. In the front-zone, the goods are also identified for the inventory management system or the material flow computer.

EP 1 964 792 B1 by the present applicant discloses a method of making transporting units available from a storage facility on at least one collecting line. AS/RS in each storage racking aisle, retrieval-from-storage and outbound lines are controlled, in such a way as to be matched and coordinated to one another, and are loaded with goods that ultimately they end up on, or are discharged from, the collecting line in a sorted fashion.

The control and matching are thus relatively complex and require evident technical work in the so-called front-zone, i.e. the area outside the actual racking, is necessary to achieve high trough put and sequencing.

The applicants own filing DE 10 2012 107 176 A1 discloses a method of inter changing units in the rack itself by means of the load handling means, such that the units must not be retrieved and rerouted through the front zone. Essentially the units are pushed through adjacent racks from a rack of the first aisle into the adjacent rack of the next aisle where a second load handling means may retrieve the unit if needed, whereby most of the front zone functions become obsolete.

US 2009/136328 A1 discloses a method and a work station for order-picking and, simultaneously, packing articles onto a shipping support, comprising: at least one rack, which is divided into at least one rack plane respectively comprising a plurality of rack positions for storing load supports, wherein the articles to be picked are stored preferably in or on the load supports in rack positions; at least one vertical lift unit arranged adjacently to a longitudinal side of the rack and being adapted to retrieve load supports from such rack positions being adjacent to the lift unit; and at least a packing station, which is arranged within an immediate area of the lift unit. More precisely, US 2009/136328 discloses the following features of claim 1: a method of order fulfilling by making order and product units available from a storage facility at a picking station in a picking level wherein the storage facility comprises:
- a storage racking comprising a plurality of multilevel storage racks in which order and/or product units are stored, wherein the storage racks are disposed back-to-back in pairs and have an aisle between pairs;
- at least one automatic storage and retrieval device for each storage racking aisle, wherein the order and product units are stored and retrieved from the storage racking by the automatic storage and retrieval device;
- at least one picking station for picking from product units into order units for fulfilling orders, to which order and product units are fed;
- at least one lift for the order units used to transfer the order units vertically;
- at least one separate materials handling device is used to transfer the product units from the storage racking to the picking station;
wherein the said at least one lift is connected to the at least one picking station and the separate storage for the order units is connected to the picking station by said at least one lift.

In contrast thereto, the object of the invention is to provide a method of order fulfilling, which improves on this method and provides reduced technical complexity and space, lowers cost but still achieves better throughput.

This object is achieved by the method of claim 1.

In accordance with the invention, it has been recognized that when the said at least one lift is directly connected to the at least one picking station and the separate storage for the order units is connected to the picking station by said at least one lift, it is possible to improve performance, because order units are stored in different and separate areas, which each have an own lift, so that the storage and retrieval of the corresponding units and their transportation to the picking station can be performed in parallel thereby improving throughput. This method also allows for zone routing, sequencing and sorting of order units within the storage itself. There is no need for a front zone or dedicated sorters / sequencers anymore. The product units are stored in the same manner, so that at least one further lift integrated within the footprint of the storage racks is used to transfer the product units vertically and in that each lift is directly connected to a picking station in a picking level and in that the order units are stored separately within the storage facility and the separate storages are connected to the picking station by said lift. Alternatively the product units are transferred from storage racking by a separate materials handling device, in particular a conveyor loop.

Also the invention allows for reduction of the size of the corresponding storages of the order units and product units and these can now be catered in size to the actual needs. Usually the storage for the order units will be smaller in size.

The separate storages can be statically or dynamically allocated areas within one article/order storage, spatially separated storages or combinations of both. Preferably only one lift per storage is connected to a picking station, as this simplifies the system and realizes very good throughput. Additionally two lifts in a single aisle may be connected to one picking station on a single level.

In the present application the picking stations can be manual operated and either semi- or fully automated order picking stations. A fully automated picking station is defined as a picking station according to the goods-to-person principle with fully automated unit (totes, container, trays, boxes etc.) handling, i.e. a fully automated supply and discharge and presentation of the product and order units. Empty order units and/or units with commissioning goods are automatically supplied to the work station. Units are placed in ergonomically optimal height on the picking station. Usually such a station will also incorporate means for directing, instructing and controlling as well as supervising the picker (e.g. pick-to-light, optical pointing device, IT display etc.), who will still manually pick out of product units into order units. In contrast a semiautomatic picking station will not have the fully automated unit handling just described, but will involve some manual processing of units.

It is preferred that the picking level is arranged between the storage for order units and storage for product units, i.e. the order units and storage for product units are above and below the picking level.

The picking stations may be orientated such that they face each other and lifts are located between them. It is also possible that two picking stations are connected to two lifts on a single level.

Additionally a picking station may have temporary shelving, e.g. for pre-picking certain articles.

Preferably the picking station is a 1:1 picking station, meaning one product unit is presented for picking from and putting into a single order unit at the same time, as this simplifies the picking process and is also more ergonomic for the picker. Also the picking station is preferably part of a product unit loop and part of an order unit loop, each connected to the corresponding lift. The picking stations may however also be 1 :n, n:1 and n:n picking stations, in which the picker picks from one or more product units into one or more order units. The picking stations may also be equipped with picking aids, such as pick-to-light or put-to-light indicators, voice assisted picking, or other visual or vocal picking aids, which indicate pick and/or put positions and amount of articles to pick/ put etc.

Preferably the automatic storage and retrieval device (AS/RS) is fed by an inbound-buffer-conveyor and/or feeds into an outbound-buffer-conveyor, wherein the buffers are arranged within the racking unit's footprint. This allows for high performance due to quick relief of the AS/RS.

In the non-picking levels the lift is preferably fed by an inbound-buffer and feeds into an outbound-buffer, wherein the buffers are arranged within the racking unit's footprint accordingly, such that a drive by of the AS/RS is possible. Usually these buffers will be arranged directly adjacent to the lift.

In accordance with a further aspect of the invention, it has been also recognized that when transporting or storage units are exchanged directly between two adjoining storage racking units from one storage racking aisle to an adjacent storage racking aisle via cross conveyance locations in the storage racking units, distribution and/or complex sorting in the front-zone can be omitted, since the transporting units are already stored in a single storage rack aisle even if initially they were stored elsewhere. When retrieved from storage, they are simply retrieved in sequence within a single aisle. Therefore a direct transfer of the transporting units without distribution or sorting outside of the aisles can be achieved without "crossing" conveyors and this with a simpler and smaller technical installation with smaller space and higher reliability. The transporting or storage units can therefore just be retrieved from the respective aisle in the required sequence.

The storage is preferably a fully automated storage.

In other words, storage racking locations of abutting racking units are used for passing transporting or storage units from one side of the racking through to the next, so that the transporting units can be transferred from one racking to the next.

Therefore, cross conveyance or sorting is possible inside the racking units themselves and accordingly it is possible to dispense with or at least minimize "cross conveyance" in the front-zone.

In an expedient manner, the cross conveyance locations are provided in each level or any selected level of the storage racking units.

Particularly effective path-time optimization is achieved if the cross conveyance locations are disposed closer to inbound and outbound buffer conveyors. It is also possible to locate cross conveyance locations at different positions within a level.

The cross conveyance locations can also be used as buffers, especially if they belong to final destination aisle of the transport or storage units, i.e. the transporting or storage units remain therein, until they are actually needed or retrieved.

The exchange can be effected actively or passively with regard to the AS/RS i.e., on the one hand the cross conveyance location can be simply a passive storage surface, on which the AS/RS of one aisle deposits transporting or storage units (quasi places them into storage) and from which the AS/RS of the adjacent aisle receives transporting units (quasi removes them from storage). For each racking storage location or cross conveyance location this procedure can always be performed in one direction only or in both directions.

By reason of the simplicity of the cross conveyance locations it is also possible to subsequently retrofit or refit cross conveyance locations and to adapt flexibly to the level of efficiency required in the storage system.

For exchange purposes, the AS/RS can likewise place the transporting units in normal storage, double-depth storage or multiple-depth storage in the cross conveyance location. The AS/RS of one aisle can thus place the transporting or storage units in storage in the cross conveyance locations to such a depth that they are already to be assigned to the adjacent racking and can be reached "normally" by the AS/RS in the adjacent racking.

In addition, the load receiving means, e.g. telescopic arms, can have an extended range.

It is also possible to use a stacked storage of transporting or storage units.

Since the cross conveyance locations are subjected to be utilized extensively and reduce a damage of transport or storage unit, it is expedient if the floors of the cross conveyance locations can be coated to reduce friction and/or structural reinforcement can be effected.

It is particularly preferable if the AS/RS are single-level racking serving units. In particular shuttles or satellite vehicles are preferred. Also shuttles with a stacked arrangement of two load handling platforms or an elevating platform are to be used in connection with the invention for handling several levels from a single rail.

It is thus possible in accordance with the invention to achieve a particularly high level of retrieval efficiency whilst fully maintaining the desired sequence of transporting or storage units in any aisle. This is also achieved with considerably less technical work than in accordance with the Prior Art.

It is understood that where the term "transporting units" or likewise "storage units" is used, it is not to be interpreted as limiting, in fact other types of transport (e.g. trays, pallets etc.) can also be used equally effectively within the scope of the invention. In particular, the term "transporting units" or "storage units" also includes totes, trays, containers, paperboard containers, carton boxes, packaging units, i.e. combined individual articles, etc. and individual articles. These units can either be product or donor units, from which a picker takes articles for an order, so that these function as a donor (often also called product units), or these units can be order units for collecting articles of an order.

It is preferred that the AS/RS machine of the shuttle type is provided per level, as a so-called single-level AS/RS device. However it is also possible to use shuttles equipped with a lifting platform, such that they are able to receive and discharge units not only to the level that they move in but also to levels above and/or below. For example the unit carrying platform with the telescopic arms could be arranged on a lifting device such as a scissor table etc. Such lifting platforms will usually be constructed to service up to four levels of racking. With such a shuttle the lifts need not be loaded and/or discharged at each level and associated buffers etc. need not be arranged on each level, but only on the levels of the shuttle itself, i.e. the levels directly equipped with a shuttle.

In a particular preferred embodiment, s single-level AS/RS, e.g. so-called Multishuttles®, are used as the AS/RS.

The Multishuttle® is a system which can be used universally, is constructed in a modular fashion and combines storage and transportation in an integrated concept. The Multishuttle® supplements the domain of automatic small parts storage facilities as a high-performance, inexpensive and innovative solution. It is a rail-borne vehicle which operates in the racking and serves the entire storage system. The system concept is based upon autonomous rail-guided vehicles for container or article transportation which operate inside and outside the storage system. A specific load receiving means permits short load-change times and simultaneous loading and unloading. The system has travel rails which are installed in each level of the storage facility or elevated or suspended in the pre-zone. In addition to guiding the vehicles, they also supply voltage thereto.

The shuttle can be used in two arrangements, a so called "captive" or "roaming" arrangement. In the captive arrangement the shuttle stay in their respective level. In the roaming alternative the shuttle change levels as required.

It is favorable if each outbound lift has one or more, in particular two, locations/positions for the transporting or storage units.

It is also expedient if each level of the storage racking or depending on the kind of AS/RS used each level directly equipped with a shuttle has at least one buffer location for decoupling the single-level AS/RS and the lift. This renders it possible to fully utilize the quicker single-level AS/RS and to prevent empty-running of the lift.

The transverse displacement function by means of the cross conveyance locations within the rack offers the advantage that, in the event of a malfunction of e.g. an outbound lift/inbound lift or feeding lines, the function of the relevant aisle can be maintained.

It is preferred that the lifts are of drive through type, meaning that the units (containers, trays, articles etc.) may pass through the lift itself onto the corresponding buffer, conveyor etc. To be distinguished from this is the so-called drive-by type of lift, which means that the AS/RS devices in the aisle may drive past the lift, i.e. the lift does not hinder the movement of the shuttles within the aisles. It is preferred that the lifts have both features.

Further features and details of the invention are apparent from the description hereinafter of the drawing, in which
- Figure 1: shows a schematic side view of a picking level in a storage facility;
- Figure 2: shows a schematic plan view of the level A-A of the storage facility of figure 1;
- Figure 3: shows a schematic plan view of the level B-B of the storage facility of figure 1;
- Figure 4: shows a schematic plan view of the level C-C of the storage facility of figure 1.

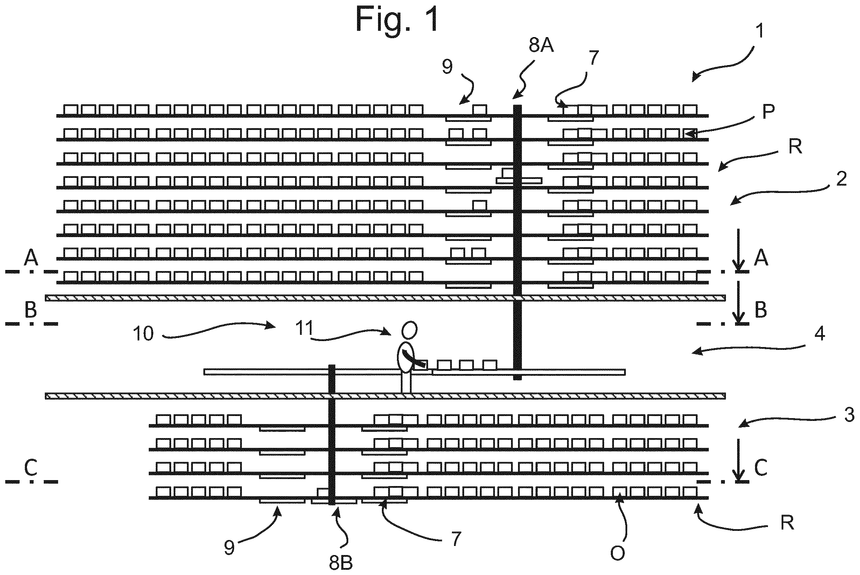

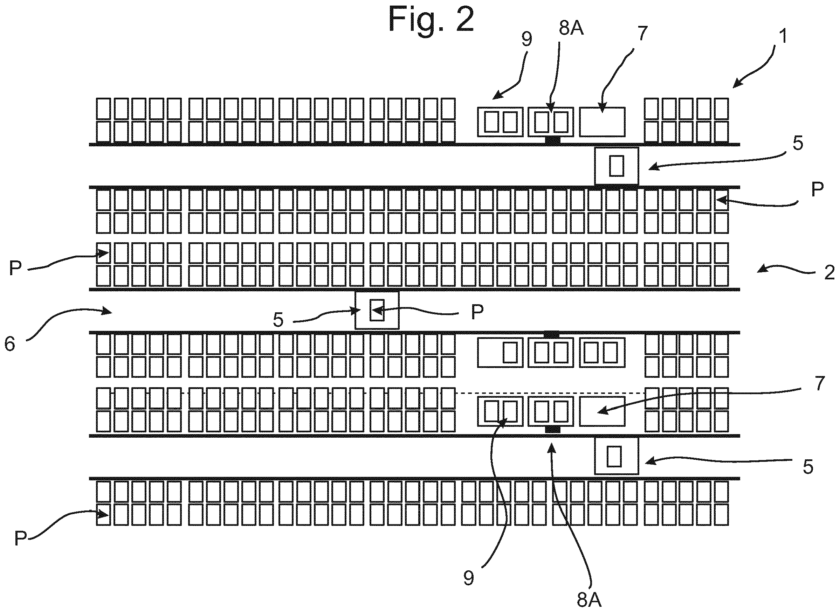

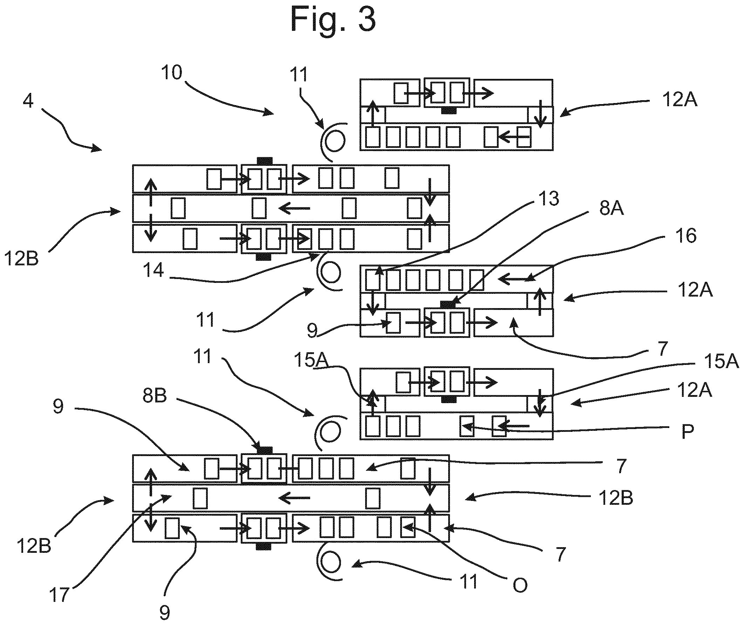

The Figures 1 through 4 illustrate a storage facility, which is designated as a whole by the reference numeral 1, having a plurality of storage racking aisles 6 and storage racking units R having a plurality of levels.

The storage facility 1 includes a first upper storage area 2 for product units P only, which carry articles to be picked from. The storage facility 1 further includes a second lower storage area 3 for order units O only, into which articles of a certain order are placed into or collected.

In between a picking level 4 is located, in which picking stations10 are positioned for performing the picking of articles for orders from the product units P into order units O.

The storage racking units R are disposed in such a manner that the storage racking units R which are not disposed on the outside are each disposed in pairs adjoining one another and have a storage racking aisle 6 on one side.

The storage racking units R located on the inside in each case abut one another "back-to-back".

Every other storage racking unit R is provided with a lift 8 having at positions for two units in each case. The lift 8 is positioned within the rack itself, i.e. within its footprint, such that the single level AS/RS 5 (also referred to as shuttles) may pass the lift 8 in the aisle 6 (so-called drive-through or drive-by configuration).

The lift 8 is adjoined by an inbound and outbound buffer conveyor 7 and 9 in each storage level, which are disposed between the lift 8 and the storage racking R, in order to decouple the lift 8 from the shuttles 5 which travel in the storage racking aisle 6.

The shuttle 5 is fed by an inbound-buffer 7 and feeds into an outbound-buffer 9, wherein both buffers 7, 9 are arranged within the racking unit R directly adjacent the lift 8. In other words the shuttle 5 drop off the units to the buffer 7 or pick up the units from the buffer 9. The buffer 7 feed into the lift 8 and the lift 8 feed out to the buffer 9.

The lift 8 is arranged in one of the pair of racking units R and is fed by a storage-entry feeding line and itself feeds the outbound line in the picking level 4 (not shown).

Therefore, each picking station 10 in the pinking level 4 is connected via a lift 8 to both the product unit storage 2 and the order unit storage 3 such that both kind of units are fed to the station 10 for picking for fulfilling orders by the picker 11.

The shuttles 5 are provided in each storage racking aisle 6 and in each level of the storage areas 2, 3. These are thus a so-called "captive" variant, in which the shuttles or satellite vehicles 5 are fixedly allocated to a level and do not change levels or aisles, which theoretically would be possible.

The shuttles 5 include a transport platform for receiving/carrying the respective storage unit T (paperboard container, tray, totes, container, goods without any loading aids, etc.). Disposed in each case to the side on the transport platform are telescopic arms which push the storage unit T off, or pull it onto, the platform. In addition, the telescopic arms are extendible on both sides of the storage racking aisle 6 into the racking units R and have fingers which can be open and close in a known manner.

Particular exchange locations Q for cross-conveyance of units P, O from one racking R into the adjacent racking R are provided in each level 2, 3 of the storage racking units R, so that the units are exchanged inside the storage racking units R themselves and it is possible to dispense with or at least minimize corresponding work in the pre-zone.

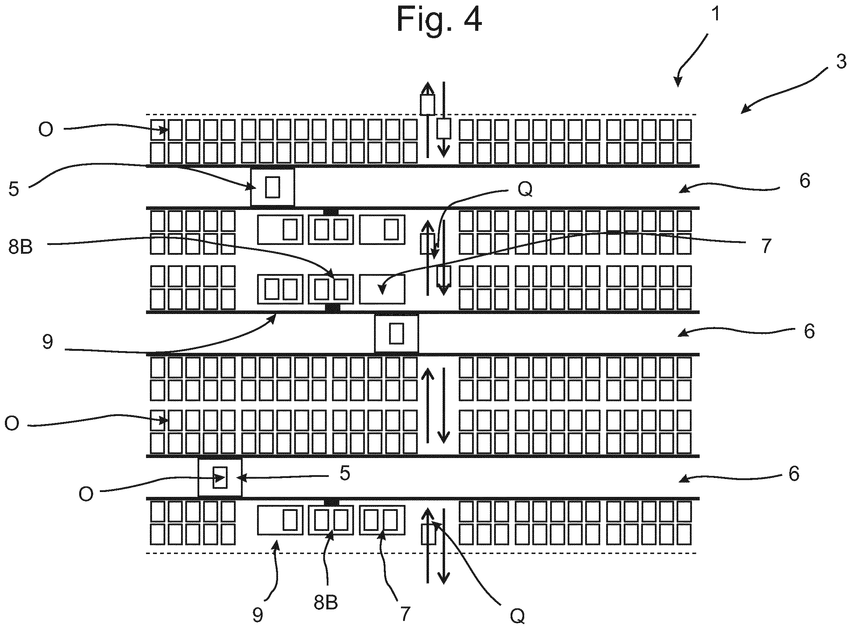

The locations Q for cross-conveyance of units O, P are located directly behind the buffers 7, 9 or corresponding positions in the racking units R (see Fig 4). However they may of course also be located at different positions within the racks.

Therefore, the shuttle 5 or the telescopic arms thereof can deposit units O, P in the cross conveyance locations Q and push them to the corresponding location in the adjacent racking R. For this purpose, the respective unit O, P is being acted upon by the finger of the telescopic arms beyond a normal rear storage location of one cross conveyance location Q of the first racking R into the respective rear storage location of the adjacent cross conveyance location Q of the adjacent racking R (indicated by arrows). In other words the units are pushed through one rack past the usual storage position into a second adjoining rack. This is shown in Figure 4 for the order unit storage 3. Obviously product storage 2 also has corresponding cross conveyance locations Q in the racking R.

A plurality of cross conveyance locations Q may be provided in each level, so that they do not have to be emptied immediately so operation of neighboring shuttles on the same level can be decoupled.

For the purpose of retrieval in levels 2, 3, the units P, O are taken from the storage racking R by the shuttle 5 and are discharged onto the retrieval or outbound buffer 9 which conveys the units O, P further to the lift 8 and thus to the picking level 4.

In a usual picking process for order fulfillment, the picker P takes the goods out of the product unit P conveyed to picking station 10 and puts them into provided order unit O.

After picking the product unit P is transported back into the storage 2 via the corresponding lift 8.

Discharge of completed order units O is performed via the lifts 8B which may discharge the units in a dedicated discharge level (not shown) in which the order are prepared for shipping etc.

In the same manner product units P may be refilled/ sourced in a dedicated replenishment and supply level (also not shown) which is connected to the lifts 8A.

The picking stations 10 are each connected by a lift 8A to the product unit storage 2 and by a lift 8B to the order unit storage 3.

Both lifts 8A and 8B are similarly connected by a loop 12A, B to the picking stations 10, such that the picking station 10 includes a pick position 13 and a put position 14, arranged at an angle (corner) to each other forming an ergonomic picking place for the picker 11.

The loop 12A with the pick position 13 is formed by the lift 8A and the adjacent inbound buffer 9 and outbound buffer 7 (see above). The buffers 7, 9 are connected by right angle transfers 15A (RAT) to accumulation conveyor 16, closing the loop 12A.

In this manner the product units P coming from the lift 8A are discharged to buffer 7, transferred by RAT 15A to conveyor 16 to the pick position 13. After picking they are transferred again via a second RAT 15A to buffer 9 and back onto lift 8A for drop off to a storage level in product unit storage 2.

In a similar manner loop 12B for order units O is setup. However loop 12 B is shared by two adjacent picking stations 10 so that the RAT's (see above) are superfluous.

Instead the lifts 8B discharge to buffer 7 which forms put position 14 and is therefore in form of an accumulation conveyor. From buffer 7 the order units are transferred to a conveyor 17 shared by two loops 12B and accordingly two lifts 8B. This conveyor 17 conveys the order units O anti parallel to buffer 7..

If the order unit O is not complete and needs to be stored intermediately before final completion, the corresponding unit O is transferred to buffer 9 and back to lift 8B and therefore back into a level of storage 3.

Complete orders will be discharged from the lift 8B at the discharge level as explained above.

If necessary it can then be retrieved as discussed above. It can also be transferred to a different location or aisle within the storage by use of the cross conveyance locations Q.

### Reference list

- 1: storage facility
- 2: product unit storage
- 3: order unit storage
- 4: pinking level
- 5: shuttle
- 6: aisle
- 7: outbound buffer
- 8: lift
- 9: inbound buffer
- 10: picking station
- 11: picker
- 12: loop
- 13: pick position
- 14: put position
- 15: right angle transfer
- 16: accumulation conveyor
- 17: shared conveyor

## Claims

1. Method of order fulfilling by making order and product units (O, P) available from a storage facility (1) at a picking station (10) in a picking level wherein the storage facility comprises:
- a storage racking comprising a plurality of multilevel storage racks (R) in which order and product units (O, P) are stored, wherein the storage racks are disposed back-to-back in pairs and have an aisle between pairs and wherein the order units (O) are stored separately from the product units (P) within the storage facility;
- at least one automatic storage and retrieval device (5) of the shuttle type provided for each storage racking aisle, wherein the order and product units are stored and retrieved from the storage racking by the automatic storage and retrieval device (5);
- wherein order and product units (O, P) are exchanged directly between two adjoining storage racks (R) from a source storage rack to an adjacent destination storage rack via cross conveyance locations (Q) in the storage racks themselves;
- at least one picking station (10) for picking from product units into order units for fulfilling orders, to which order and product units are fed;
- at least one lift (8B) integrated within the footprint of the storage racks (R) for the order units (O) used to transfer the order units (O) vertically;
- at least one further lift (8A) integrated within the footprint of the storage racks (R) is used to transfer the product units (P) vertically, or a separate materials handling device is used to transfer the product units (P) from the storage racking to the picking station;
wherein the said at least one lift (8B) is directly connected to the at least one picking station (10) and the separate storage for the order units (O) is connected to the picking station (10) by said at least one lift (8B).

2. Method as claimed in claim 1, **characterized in that** said at least one further lift (8A) is directly connected to said at least one picking station (10) in a picking level and the storage for the order units (O) is connected to the picking station (10) by a said at least one further lift (8A).

3. Method as claimed in claim 1, **characterized in that** product units (P) are transferred from storage racking to the picking station by said separate materials handling device, in particular a conveyor loop.

4. Method as claimed in any one of the preceding claims, **characterized in that** said at least one lift (8B) or least one further lift (8A) is arranged in one of the pair of racks (R) of an aisle.

5. Method as claimed in claim 4, **characterized in that** said at least one lift (8B) or least one further lift (8A) is arranged in each rack (R) of an aisle.

6. Method as claimed in any one of the preceding claims, **characterized in that** the shuttle (5) is decoupled from said at least one lift (8B) or least one further lift (8A) by an inbound-buffer-conveyor (7) and/or an outbound-buffer-conveyor (9), wherein the buffer-conveyors (7, 9) are arranged within the racks (R).

7. Method as claimed in claim 6, **characterized in that** the cross conveyance locations (Q) are arranged directly behind/next to the inbound-buffer-conveyor (7) and/or outbound-buffer-conveyor (9) within a rack (R).

8. Method as claimed in any one of the preceding claims, **characterized in that** the shuttle (5) itself displaces the order and/or product units (O, P) within the cross conveyance locations (Q).

9. Method as claimed in claim 8, **characterized in that** the shuttle (5) of a source rack places the order and/or product units (O, P) into the cross conveyance location (Q) in an adjacent destination rack.

10. Method as claimed in any one of the preceding claims, **characterized in that** order and product units (O, P) are stored in separate racks and/or storage areas.

11. Method as claimed in any one of the preceding claims, **characterized in that** the picking station (10) is a 1:1 picking station (10) which is part of a product unit loop (12A) and part of an order unit loop (12B).

12. Method as claimed in any one of the proceeding claims, **characterized in that** the automatic storage and retrieval device (5) of the shuttle type is a single level shuttle.

## Patentansprüche

1. Verfahren zur Auftragsabwicklung durch Verfügbarmachung von Auftrags- und Produkteinheiten (O, P) aus einer Lagereinrichtung (1) in einer Kommissionierungsstation (10) in einer Kommissionierungsebene, wobei die Lagereinrichtung Folgendes umfasst:
- eine Lagerregalanlage, die eine Vielzahl von Lagerregalen (R) mit mehreren Ebenen umfasst, in denen Auftrags- und Produkteinheiten (O, P) gelagert werden, wobei die Lagerregale paarweise rückseitig aneinander angeordnet sind und zwischen den Paaren einen Gang aufweisen, und wobei die Auftragseinheiten (O) in der Lagereinrichtung separat von den Produkteinheiten (P) gelagert werden;
- mindestens ein automatisches Ein- und Auslagerungsgerät (5) der Shuttle Art, das für jeden Gang der Lagerregale vorgesehen ist, wobei die Auftrags- und Produkteinheiten von dem automatischen Ein- und Auslagerungsgerät (5) in der Lagerregalanlage ein- und ausgelagert werden;
- wobei Auftrags- und Produkteinheiten (O, P) direkt zwischen zwei angrenzenden Lagerregalen (R) von einem Ausgangslagerregal in ein benachbartes Ziellagerregal über Quertransportplätze (Q) in den Lagerregalen selbst ausgetauscht werden;
- mindestens eine Kommissionierungsstation (10) zum Zusammenstellen von Auftragseinheiten aus Produkteinheiten zur Auftragsabwicklung, zu der Auftrags- und Produkteinheiten befördert werden;
- mindestens einen Lift (8B), der auf der Standfläche der Lagerregale (R) für die Auftragseinheiten (O) integriert ist und für den senkrechten Transport der Auftragseinheiten (O) verwendet wird;
- mindestens ein weiterer Lift (8A), der auf der Standfläche der Lagerregale (R) integriert ist, wird für den senkrechten Transport der Produkteinheiten (P) verwendet, oder eine separate Materialtransportvorrichtung wird für den Transport der Produkteinheiten (P) aus der Lagerregalanlage zu der Kommissionierungsstation verwendet;
wobei der mindestens eine Lift (8B) direkt mit der mindestens einen Kommissionierungsstation (10) verbunden ist und das separate Lager für die Auftragseinheiten (O) mit der Kommissionierungsstation (10) über den mindestens einen Lift (8B) verbunden ist.

2. Verfahren nach Anspruch 1, **dadurch gekennzeichnet, dass** der mindestens eine weitere Lift (8A) direkt mit der mindestens einen Kommissionierungsstation (10) in einer Kommissionierungsebene verbunden ist und das Lager für die Auftragseinheiten (O) mit der Kommissionierungsstation (10) über den mindestens einen weiteren Lift (8A) verbunden ist.

3. Verfahren nach Anspruch 1, **dadurch gekennzeichnet, dass** Produkteinheiten (P) von der separaten Materialtransportvorrichtung, insbesondere einer Fördererschleife, von der Lagerregalanlage zur Kommissionierungsstation transportiert werden.

4. Verfahren nach einem der vorhergehenden Ansprüche, **dadurch gekennzeichnet, dass** der mindestens eine Lift (8B) oder der mindestens eine weitere Lift (8A) in einem von dem Paar von Regalen (R) eines Gangs angeordnet ist.

5. Verfahren nach Anspruch 4, **dadurch gekennzeichnet, dass** der mindestens eine Lift (8B) oder der mindestens eine weitere Lift (8A) in jedem Regal (R) eines Gangs angeordnet ist.

6. Verfahren nach einem der vorhergehenden Ansprüche, **dadurch gekennzeichnet, dass** das Shuttle (5) von dem mindestens einen Lift (8B) oder dem mindestens einen weiteren Lift (8A) durch einen Einlagerpufferförderer (7) und/oder einen Auslagerpufferförderer (9) entkoppelt wird, wobei die Pufferförderer (7, 9) innerhalb der Regale (R) angeordnet sind.

7. Verfahren nach Anspruch 6, **dadurch gekennzeichnet, dass** die Quertransportplätze (Q) unmittelbar hinter/neben dem Einlagerpufferförderer (7) und/oder Auslagerpufferförderer (9) innerhalb eines Regals (R) angeordnet sind.

8. Verfahren nach einem der vorhergehenden Ansprüche, **dadurch gekennzeichnet, dass** das Shuttle (5) selbst die Auftrags- und/oder Produkteinheiten (O, P) innerhalb der Quertransportplätze (Q) verschiebt.

9. Verfahren nach Anspruch 8, **dadurch gekennzeichnet, dass** das Shuttle (5) eines Ausgangsregals die Auftrags- und/oder Produkteinheiten (O, P) in den Quertransportplatz (Q) in einem benachbarten Zielregal bringt.

10. Verfahren nach einem der vorhergehenden Ansprüche, **dadurch gekennzeichnet, dass** Auftrags- und Produkteinheiten (O, P) in separaten Regalen und/oder Lagerbereichen gelagert werden.

11. Verfahren nach einem der vorhergehenden Ansprüche, **dadurch gekennzeichnet, dass** die Kommissionierungsstation (10) eine 1:1-Kommissionierungsstation (10) ist, die ein Teil eines Produkteinheitenkreislaufs (12A) und Teil eines Auftragseinheitenkreislaufs (12B) ist.

12. Verfahren nach einem der vorhergehenden Ansprüche, **dadurch gekennzeichnet, dass** das automatische Ein- und Auslagerungsgerät (5) als Shuttle ein Einebenen-Shuttle ist.

## Revendications

1. Méthode de finalisation de commande par la mise en disponibilité des éléments de commandes et de produits (O, P) d'une installation de stockage (1) à une station de prélèvement (10) dans un niveau de prélèvement, dans laquelle ladite installation de stockage comprend :
- un rayonnage d'entreposage comprenant une pluralité de rayons de stockage multi-niveaux (R), dans lequel des éléments de commandes et de produits (O, P) sont stockées, les rayons de stockage étant disposés dos-à-dos par paires et ayant une allée entre les paires, et les éléments de commandes (O) étant stockés séparément des éléments de produits (P) au sein de l'installation de stockage ;
- au moins un dispositif automatique de stockage et d'extraction (5) de type navette fourni pour chaque allée des rayons de stockage, les éléments de commandes et de produits étant stockés et extraits du rayonnage d'entreposage par le dispositif automatique de stockage et d'extraction (5) ;
- dans laquelle les éléments de commandes et de produits (O, P) sont échangés directement entre deux rayons de stockage (R) contigus à partir d'un rayon de stockage source jusqu'à un rayon de stockage destinataire adjacent via des zones de convoyage transversales (Q) dans les rayons de stockages eux-mêmes ;
- au moins une station de prélèvement (10) pour prélever des éléments de produits vers des éléments de commandes pour finaliser des commandes, la au moins une station de prélèvement étant alimentée en éléments de commandes et de produits ;
- au moins un élévateur (8B) intégré à l'intérieur de l'emprunte des rayons de stockage (R) pour les éléments de commande (O) et utilisé pour déplacer les éléments de commandes (O) verticalement ;
- au moins un élévateur supplémentaire (8A) intégré à l'intérieur de l'emprunte des rayons de stockage (R) et utilisé pour déplacer les éléments de produits (P) verticalement, ou un dispositif de manipulation d'articles séparés utilisé pour déplacer les éléments de produits (P) du rayonnage d'entreposage à la station de prélèvement ;
- dans laquelle ledit au moins un élévateur (8B) est directement connecté à la au moins une station de prélèvement (10), et le stockage séparé pour les éléments de commandes (O) est connecté à la station de prélèvement (10) par ledit au moins un élévateur (8B).

2. Méthode selon la revendication 1, **caractérisée en ce que** ledit au moins un élévateur supplémentaire (8A) est directement connecté à ladite au moins une station de prélèvement (10) dans un niveau de prélèvement et le stockage pour les éléments de commandes (O) est connecté à la station de prélèvement (10) par ledit au moins un élévateur supplémentaire (8A).

3. Méthode selon la revendication 1, **caractérisée en ce que** lesdits éléments de produits (P) sont transférés d'un rayonnage d'entreposage à la station de prélèvement par ledit dispositif de manipulation d'articles séparés, en particulier une boucle de convoyage.

4. Méthode selon l'une des revendications précédentes, **caractérisée en ce que** ledit au moins un élévateur (8B) ou ledit au moins un élévateur supplémentaire (8A) est disposé dans l'un de la paire de rayons (R) d'une allée.

5. Méthode selon la revendication 4, **caractérisée en ce que** ledit au moins un élévateur (8B) ou ledit au moins un élévateur supplémentaire (8A) est disposé dans chaque rayon (R) d'une allée.

6. Méthode selon l'une des revendications précédentes, **caractérisée en ce que** la navette (5) est désaccouplée dudit au moins un élévateur (8B) ou dudit au moins un élévateur supplémentaire (8A) par un convoyeur entrant tampon (7) et/ou un convoyeur sortant tampon (9), les convoyeurs tampons (7, 9) étant disposés a l'intérieur des rayons (R).

7. Méthode selon la revendication 6, **caractérisée en ce que** les zones de convoyage transversales (Q) sont disposées directement derrière/à côté du convoyeur entrant tampon (7) et/ou du convoyeur tampon sortant (9) à l'intérieur d'un rayon (R).

8. Méthode selon l'une des revendications précédentes, **caractérisée en ce que** la navette (5) elle-même déplace les éléments de commandes et/ou de produits (O, P) à l'intérieur des zones de convoyage transversales (Q).

9. Méthode selon la revendication 8, **caractérisée en ce que** la navette (5) d'un rayon source place les éléments de commande et/ou de produits (O, P) dans la zone de convoyage transversale (Q) d'un rayon adjacent de destination.

10. Méthode selon l'une des revendications précédentes, **caractérisée en ce que** les éléments de commandes et de produits (O, P) sont stockés dans des rayons différents et/ou dans des zones de stockage différentes.

11. Méthode selon l'une des revendications précédentes, **caractérisée en ce que** la station de prélèvement (10) est une station de prélèvement (10) 1:1 qui fait partie d'une boucle d'éléments de produits (12A) et d'une boucle d'éléments de commandes (12B).

12. Méthode selon l'une des revendications précédentes, **caractérisée en ce que** le dispositif automatique de stockage et d'extraction (5) de type navette est une navette à niveau unique.
